Europäisches Patentamt

European Patent Office

Office européen des brevets

(19)

(11) **EP 0 800 019 A1**

(12) **DEMANDE DE BREVET EUROPEEN**

(43) Date de publication:
08.10.1997 Bulletin 1997/41

(51) Int Cl.⁶: **F16H 15/24**

(21) Numéro de dépôt: **97400691.8**

(22) Date de dépôt: **26.03.1997**

(84) Etats contractants désignés:
**CH DE GB IT LI**

(30) Priorité: **01.04.1996 FR 9604150**

(71) Demandeur: **Portalier, Pierre**
**03200 Vichy (FR)**

(72) Inventeur: **Portalier, Pierre**
**03200 Vichy (FR)**

(54) **Variateur homocinétique à transmission par surfaces roulantes à vitesse de rotation et aire de contact élevées**

(57) A l'intérieur d'un vase dont la surface de révolution a pour génératrice une tractrice et son asymptote pour axe, on fait se déplacer un galet dont le sommet du cône circonscrit est maintenu sur l'axe et dont la distance de la circonférence moyenne au sommet est égale à celle, constante, qui est comprise, sur la tangente de la tractrice, entre son asymptote et le point de contact.

Le galet vient tangentiellement en appui sur le vase dont la paroi convexe est légèrement flexible ; le contact peut avoir lieu sur toute la largeur du galet. Les deux corps roulent l'un sur l'autre sans glissement.

Les modes d'application préconisés associent deux paires vase-galet identiques. Dans un cas, les vases, accolés par leur grand côté, se déplacent par translation axiale et les galets sont reliés par leur sommet aux arbres d'entrée et de sortie. Dans l'autre cas, ce sont les galets (71, 72) qui sont accouplés et se déplacent ensemble ; les vases (77, 78), aux axes inclinés, se font face par leur petit côté ; ils sont reliés aux roues d'entrée (92) et de sortie (94). Un dispositif de permutation des paires vase-galet permet de porter à dix, ou plus, l'ampleur de la variation.

fig.7

EP 0 800 019 A1

## Description

La présente demande de brevet porte sur un variateur de vitesse mécanique, c'est-à-dire un appareil permettant de faire varier de façon continue la vitesse de rotation de l'arbre de sortie pour une vitesse constante de l'arbre d'entrée, cet effet étant obtenu sans faire appel à des moteurs intermédiaires - électriques ou hydrauliques - transmettant à l'arbre de sortie la puissance délivrée par l'arbre d'entrée.

Or les variateurs de vitesse mécaniques, s'ils présentent l'avantage d'une relative simplicité, souffrent de plusieurs défauts, certains étant plus accentués que les autres selon le type d'appareil. Ces défauts que l'on rencontre le plus souvent sont :

- le manque de caractère homocinétique, l'arbre de sortie ne tournant pas à une vitesse régulière ou du moins avec un couple de rotation constant, pour un réglage donné de la démultiplication de l'appareil. C'est notamment le cas des variateurs où l'arbre de sortie est entraîné par impulsion d'amplitude réglable.
- la perte d'énergie cinétique dissipée en chaleur, abaissant le rendement tout particulièrement dans les convertisseurs à fluide de couplage, mais aussi dans les variateurs à courroies trapézoïdales à cause du glissement de leurs flancs contre ceux de la poulie et de leur déformation en flexion - et aussi dans les variateurs à disques ou bols et galets, à cause de frottements entre ces pièces dus au fait qu'elles ne roulent que par une très faible partie de leur surface de contact, la plus grande partie glissant.
- La limitation assez stricte de leur vitesse de rotation, conséquence soit de l'utilisation de mouvements alternatifs (comme dans les appareils à impulsion) soit de l'utilisation de pièces en déformation périodique (comme dans les appareils à courroie).
- La médiocre amplitude de la plage de variation, notamment dans les convertisseurs et à un degré moindre les variateurs à courroie.
- L'assez faible valeur de la puissance massique ou de la puissance volumique de ces appareils, souvent en raison d'un rendement et d'une vitesse moyenne de rotation insuffisants ou encore - c'est le cas des variateurs utilisant des billes à la place des galets - en raison d'une surface de contact trop réduite.

Le mécanisme inventé, objet de la demande de brevet prétend échapper aux défauts que l'on rencontre dans les autres variateurs.

Son fonctionnement est homocinétique et sans vibration.

Son rendement est élevé, car la quasi absence de frottement limite la dissipation de l'énergie en chaleur. En effet, l'entraînement s'effectue entre pièces roulant presque parfaitement l'une sur l'autre.

Sa puissance massique est bonne également parce que les vitesses de rotation des organes d'entraînement peuvent être élevées car ils ne frottent pas les uns sur les autres et parce que la force d'entraînement entre ces organes peut être importante car les surfaces en contact sont relativement grandes.

- Par ailleurs l'amplitude de variation peut être accrue par la permutation des organes d'entrée et de sortie, que permet aisément la disposition de ces organes.

## DESCRIPTION GENERALE

Le mécanisme dont on demande le brevet d'invention se compose d'une surface de révolution de forme évasée à l'intérieur de laquelle vient en appui un galet tronconique : la rotation du vase entraîne celle du galet ou réciproquement.

La génératrice de la surface que l'on appellera vase est une tractrice et son axe de révolution l'asymptote de cette courbe. On sait que la tractrice - dont l'équation est connue - a notamment pour propriété la constance de la longueur du segment de tangente compris entre le point de contact et l'asymptote. Le galet a la forme d'un tronc de cône de révolution et la circonférence équidistante des bases de ce tronc de cône est située à une distance du sommet du cône égale à la longueur du segment de tangente de la tractrice. Si l'on fait en sorte que le sommet soit sur l'axe asymptote du vase, le contact du galet avec le vase aura lieu sur la circonférence précitée. Si les deux organes - le vase et le galet - roulent alors l'un sur l'autre le rapport de leurs vitesses angulaires de rotation sera le rapport entre la distance du point de contact à l'axe du vase, d'une part, et le rayon de la circonférence moyenne du galet, d'autre part. Mais la surface du vase est voulue légèrement élastique tandis que celle du galet est rigide, et l'appui du galet contre le vase est tel que celui-ci se déforme de manière que le contact entre les deux organes ait lieu sur une partie ou sur la totalité de la largeur du galet. Puisque la partie du vase en contact avec le galet et le galet lui-même sont inscrits dans des cônes de même sommet, ils peuvent rouler l'un sur l'autre sans glissement. Dans la pratique, cela n'est toutefois pas absolument vrai car, sur l'aire de contact de part et d'autre du plan contenant les axes des deux organes, la vitesse du galet reste constante ; tandis que celle du vase qui n'est pas exactement un cône de révolution varie très légèrement (la différence est variable mais atteint au plus 5/1000 avec les dimensions indiquées ci-après pour le vase et le galet, sa valeur moyenne étant environ 1/1000).

Le fait de réaliser un fonctionnement sans pratiquement de glissement élimine les frottements, l'échauffement et la perte de puissance transmise qui s'en suit.

De plus, la capacité d'entraînement d'un organe par l'autre est maximale en l'absence de glissement, c'est-à-dire que pour une force d'appui radial donnée le plus grand effort qu'il est possible de transmettre est maximal.

En faisant se déplacer le galet sur le vase on obtient une variation continue de la démultiplication c'est-à-dire du rapport de leurs vitesses de rotation.

Toutefois, il convient de limiter la zone du vase sur laquelle circulera le galet, car, d'un, côté la courbure de la tractrice devenant trop prononcée, la déformation nécessitée par l'application du galet sera trop forte et, du côté opposé, la variation du rayon du vase en fonction du déplacement du galet deviendra trop faible eu égard aux contraintes d'encombrement de l'appareil.

Remarquons que les variations de courbure du vase sont de peu d'influence sur la facilité du déplacement du galet étant donné que le vase présente sa face convexe vers le galet; on conçoit en effet que dans ces conditions la déformation locale du vase puisse aisément suivre la position du galet.

Les dimensions du vase établissant un bon compromis entre les contraintes précitées et l'intérêt d'une plage de variation importante paraissent être les suivantes ; si l'on se donne pour $T = 100$ la longueur T du segment de tangente de la tractrice et si on note $\alpha$ l'angle que fait la tangente avec l'asymptote, les données pour le modèle préconisé sont :

- **points de contact extrêmes du milieu du galet**
  $\alpha_1 = 13,2°$ et $\alpha_2 = 24°$
- **distance y de ces points à l'asymptote** ($y = 100 \sin\alpha$)
  $y_1 = 22,84$ et $y_2 = 40,67$
- **distance des projections orthogonales $\chi$ de ces points sur l'asymptote**

$$\left|\chi_2\text{-}\chi_1\right| = 100\left|\cos\,\alpha_2 + \text{Ltg}\frac{\alpha_2}{2}\text{-}\cos\,\alpha_1\text{-}\text{Ltg}\frac{\alpha_1}{2}\right| = 54,8$$

Les dimensions du galet ont été choisies les plus grandes possibles afin d'obtenir la plus grande surface possible de contact entre vase et galet. Toutefois, le diamètre du galet doit être suffisamment inférieur au petit diamètre du vase pour permettre le passage entre vase et galet de pièces nécessaires à la structure de l'appareil et la largeur du galet doit être assez petite pour que la déformation imposée au vase lorsque le galet est en appui sur toute sa largeur ne soit pas excessive. Pour ces considérations, le modèle de galet choisi a pour diamètre moyen 36,5 et pour épaisseur 20 mesurée le long de la génératrice. Puisque la distance au sommet de la circonférence moyenne vaut 100, l'angle au sommet du cône circonscrit au galet vaut 21°.

Par ailleurs les diamètres minimal et maximal sont sur le galet 32,7 et 40.

Les dimensions du vase tiennent compte de la largeur du galet, or celui-ci lorsqu'il arrive aux points de contact extrêmes doit pouvoir être encore totalement recouvert par le vase. Les diamètres maximal et minimal du vase sont donc 90 et 40 et sa longueur 73. L'amplitude $\rho$ de la variation de vitesse de rotation, soit du galet supposé entraîné par le vase tournant à vitesse constante, soit du vase entraîné par le galet est le rapport $\frac{y_2}{y_1}$ des distances à l'axe du vase des points de contact extrêmes du milieu du galet; ce rapport est égal à 1,7778 soit $\frac{16}{9}$. C'est délibérément une fraction de nombres entiers afin de permettre de le reproduire au moyen d'engrenages, pour certaines applications.

Du fait que le vase soit légèrement écrasé par la pression du galet, les valeurs indiquées pour l'amplitude ne sont pas tout à fait exactes puisque $y_2$ et $y_1$ sont légèrement supérieurs aux valeurs théoriques indiquées précédemment.

L'expression du rayon de courbure R de la tractrice considérée étant $R = 100 \cot g\infty$, on obtient une valeur assez approchée de l'écrasement maximal utile pour chaque position du galet, en assimilant cet enfoncement à la flèche d'un arc de cercle de rayon R sous tendu par une corde égale à la largeur L du galet.

Cette flèche a pour expression $f = \frac{L^2}{8R}$ [le rayon du cercle pouvant être assimilé au rayon de courbure au point de contact]

Pour $\alpha_2 = 24°$     $R = 100 \times 2,25$     or $L = 20$     $f = 0,22$

Et la variation de $y_2$, $\Delta y_2 = 0,22 \times \cos 24° = 0,20$

soit pour $y_2$ la valeur modifiée : 40,9

Pour $\alpha_1 = 13,2°$     $R = 100 \times 4,26$     $f = 0,12$

$\Delta y_1 = 0,12 \times \cos 13,2° = 0,11$     $y_1$ modifié $= 23,02$

La valeur pratiquement inchangée de $\rho$ est donc $\frac{40,9}{23,02} = 1,7767$

On peut concevoir d'utiliser une portion de tractrice de courbure moyenne plus élevée et en contrepartie un galet plus étroit; les surfaces de contact sont moindres, mais l'appareil est moins encombrant.

D'autres considérations peuvent conduire à choisir des proportions différentes de celles indiquées ci-dessus. Ainsi si l'on privilégie l'amplitude de la variation, on peut préférer utiliser une plus grande partie de la tractrice, en acceptant une diminution de la puissance massique et volumique de l'appareil.

Il importe que le déplacement du galet sur le vase, ou l'inverse, soit tel que le sommet virtuel du cône, dans lequel le galet est inscrit se meuve sur l'axe du vase.

La réalisation pratique de cette condition est obtenue de la façon suivante : un bras pivote à l'une de ses extrémités autour d'un axe qui est perpendiculaire au plan contenant les axes du galet et du vase et qui coupe ce dernier axe. A son autre extrémité le bras est assujetti de façon rigide à un manchon dans lequel tourne, sans pouvoir coulisser, l'arbre matérialisant l'axe du galet. La longueur du bras et son orientation par rapport au manchon sont déterminées de façon que l'axe du galet coupe l'axe du vase en un point correspondant au sommet du cône circonscrit au galet.

Par ailleurs, le plan contenant les axes du vase et du galet est immobilisé par deux guides empêchant l'arbre du galet de se déporter sous l'effet de la force d'entraînement transmise au vase ou reçue de celui-ci. A cet effet des joues planes tenues par le châssis de l'appareil parallèlement au plan à immobiliser guident le manchon dans lequel tourne l'arbre du galet, mais lui laissent la liberté de s'incliner plus ou moins par rapport à l'axe du vase en fonction du déplacement relatif du galet. Il est commode d'utiliser le socle reliant par leurs bases les deux joues de maintien comme siège d'un ressort (ou d'un vérin) sur lequel repose l'arbre du galet par l'intermédiaire du manchon, celui-ci transmettant au galet la force d'appui contre le vase, exercée par le ressort.

Une façon avantageuse de mettre en oeuvre le type de variateur, objet de l'invention, consiste à associer deux paires vase-galet identiques.

Ce sont soit les deux vases qui sont reliés et qui tournent à la même vitesse, soit les galets.

Dans le premier cas l'un des galets est relié à l'arbre d'entrée - c'est-à-dire l'arbre menant - et l'autre est relié à l'arbre de sortie - c'est-à-dire l'arbre mené -. Tandis qu'un des galets parcourt le vase qui lui correspond depuis son extrémité étroite jusqu'à sa large extrémité, l'autre galet parcourt l'autre vase en sens contraire de sa large vers son étroite extrémité. Le premier galet entraîne le premier vase de plus en plus lentement, tandis que le second vase entraîne le second galet de plus en plus lentement. Comme les deux vases ont la même vitesse de rotation à tout instant, le rapport de la vitesse du second galet (de sortie) à celle supposée constante du galet d'entrée est égale au rapport $\frac{y_2}{y_1}$ [$y_i$ est le rayon du vase $i$ au point de contact avec le galet].: en effet, la vitesse des vases est proportionnelle à $\frac{1}{y_1}$ et la vitesse du galet de sortie est proportionnelle à la vitesse des vases et à $y_2$.

L'amplitude de la variation, c'est-à-dire le rapport des vitesses extrêmes du galet de sortie est égale à :

$$\frac{Y}{y} : \frac{y}{Y} = \left(\frac{Y}{y}\right)^2 = \rho^2$$

(y et Y sont le plus petit et le plus grand rayon des points de contact, leur rapport $\frac{Y}{y}$ a été désigné plus haut par $\rho$).

Mais on admettra que le cycle de variation commence quand le galet d'entrée se trouve sur le grand diamètre du vase : Si $\omega$ est la vitesse de rotation de l'arbre d'entrée, celle de l'arbre de sortie variera de $\frac{\omega}{\rho}$ à $\omega\rho$.

Cette disposition permet d'élever au carré le rapport de variation dont est capable une seule paire vase-galet.

Une réalisation simple de ce mode d'association place les deux vases sur un même axe et les accole par leur large extrémité. Les arbres des galets pivotent autour de points fixes (qui sont les sommets des cônes générateurs des galets). Le mode de maintien latéral des galets a été décrit plus haut. Le mouvement de rotation du galet est transmis à l'arbre d'entrée ou de sortie grâce à un couple de roues d'engrenage coniques à axes rectangulaires dont le point de convergence est le sommet virtuel du galet.

La variation de vitesse s'obtient en imprimant un déplacement de translation à l'ensemble des deux vases parallèlement à leur axe commun.

Un perfectionnement ayant pour effet d'augmenter l'amplitude de la variation - en l'élevant au carré - est basé sur la permutation des paires vase-galet et donc des arbres d'entrée et de sortie. A cette fin, ces arbres ne sont plus que des arbres intermédiaires reliés par des engrenages embrayables à un arbre menant et à un arbre mené - et il est commode que ces intermédiaires soient coaxiaux, d'où un jeu d'engrenages de renvoi car, sans eux, ces arbres sortent perpendiculairement à l'axe commun des vases, chacun à une extrémité de l'appareil.

D'autre part les couples coniques sont identiques pour que la démultiplication entre arbre du galet et arbre intermédiaire soit égale pour chaque paire vase-galet.

Désignons par d le diamètre de la roue calée sur l'arbre menant de vitesse $\omega$ et par D celui de la roue qui lui est associée par engrenage et centrée sur l'arbre intermédiaire A premier arbre d'entrée. De même d' et D' désignent les roues homologues pour l'arbre menant et pour l'arbre intermédiaire B. A la fin du premier cycle de variation, la vitesse de l'arbre de sortie sera $\rho\frac{d}{D}\omega$ (on suppose que le facteur de démultiplication entre arbre d'entrée ou de sortie et galet est 1). Pour que l'arbre menant puisse être embrayé sans heurt et sans discontinuité de vitesse sur le second arbre intermédiaire B qui, d'arbre de sortie, devient arbre d'entrée il faut que

$$\frac{d'}{D'}\omega = \rho\frac{d}{D}\omega \text{ soit } \frac{D}{d} : \frac{D'}{d'} = \rho$$

A la fin du second cycle la vitesse de l'arbre de sortie sera $\rho^3\frac{d}{D}\omega$ alors qu'au début du premier cycle elle était $\frac{1}{\rho}\frac{d}{D}\omega$.

Désignons par $\varphi$ le diamètre de la roue calée sur l'arbre mené et par $\Phi$ celui de la roue qui lui est associée par engrenage et centrée sur l'arbre intermédiaire A. De même $\varphi'$ et $\Phi'$ désignent les roues homologues pour l'arbre intermédiaire B premier arbre de sortie.

A la fin du premier cycle la vitesse de l'arbre mené sera

$$\rho\frac{d}{D}\cdot\frac{\Phi'}{\varphi'}\omega$$

Pour que l'arbre mené puisse être embrayé sans heurt sur l'arbre intermédiaire A qui d'arbre d'entrée devient arbre de sortie, il faut que :

$$\frac{d}{D}\cdot\frac{\Phi}{\varphi}\omega = \rho\frac{d}{D}\cdot\frac{\Phi'}{\varphi'}\omega \text{ soit } \frac{\Phi}{\varphi} : \frac{\Phi'}{\varphi'} = \rho$$

A la fin du second cycle la vitesse de l'arbre mené sera $\rho^3\frac{d}{D}\frac{\Phi'}{\varphi'}\omega$ alors qu'au début du premier cycle elle était $\frac{1}{\rho}\frac{d}{D}\frac{\Phi'}{\varphi'}\omega$ ou, sous une autre forme, la vitesse a varié de $\frac{1}{\rho^2}\frac{d}{D}\frac{\Phi}{\varphi}\omega$ à $\rho^2\frac{d}{D}\frac{\Phi}{\varphi}\omega$

La position coaxiale des arbres intermédiaires favorise la simultanéité des débrayages et des embrayages permutant les arbres d'entrée et de sortie dont les crabots sont manoeuvrés par la même tige centrale située dans l'axe commun de ces arbres.

L'amplitude de la variation a pour valeur $\rho^4$.

Avec pour $\rho$ le choix d'une valeur de $\frac{16}{9}(= 1,778)$ comme indiqué plus haut, l'amplitude de variation s'élève à 10 avec ce dispositif (9,9887)

Remarquons que le ressort appuie moins lorsque le galet est situé vers la grande extrémité du vase, que lorsqu'il est situé vers la petite, puisqu'il est moins comprimé. Or la puissance à transmettre au vase par le galet d'entrée est constante ainsi que la vitesse de rotation du galet ; il en découle que la force d'entraînement est constante. En revanche, la force à transmettre par le vase de sortie au galet correspondant est d'abord inférieur à la précédente d'un facteur $\rho$ - puisque la vitesse du galet de sortie est d'abord supérieure d'un facteur $\rho$ à celle du galet d'entrée - puis elle croit jusqu'à devenir supérieure d'un facteur $\rho$, la vitesse du galet de sortie étant alors inférieure d'un facteur $\rho$ à celle du galet d'entrée.

On constate que la force d'appui du ressort varie en concordance approximative avec l'effort d'entraînement nécessaire. Toutefois l'action d'un vérin hydraulique qui serait proportionnée à tout instant à la force d'entraînement juste nécessaire serait préférable mais suppose une pompe auxiliaire pour réguler la pression hydraulique.

On propose une autre application pour ce type d'agencement qui comporte encore deux vases identiques accolés par leur grande base, et coulissant le long de leur axe commun et à l'intérieur desquels roulent deux galets tronconiques dont les sommets virtuels sont fixes sur cet axe.

Mais, ce sont, cette fois les vases qui sont directement entraînés ; ils transmettent leur rotation aux deux galets et aux arbres de sortie qui sont articulés à ceux-ci.

Par translation axiale des vases, dans un sens ou dans l'autre, on ralentit la vitesse d'un galet et accroît celle de l'autre galet. Ainsi un tel appareil est un différentiel, actif - en ce sens qu'il commande les vitesses des arbres de sortie alors qu'un différentiel ordinaire ne commande à ces arbres que leur vitesse moyenne.

Par son caractère actif, il facilite sur un véhicule dont il commande les roues le virage de celui-ci et empêche le patinage unilatéral autant au bénéfice du freinage que de la motricité.

Nous décrivons maintenant un second type de variateur où sont encore associées deux paires vase-galet identiques. Ce ne sont plus les vases, mais les galets qui sont reliés et tournent à la même vitesse.

Les vases tournent autour d'axes concourants, leurs petites extrémités en regard l'une de l'autre.

L'un des vases est entraîné en rotation par une roue éventrée, il entraîne à son tour un galet qui communique sa vitesse de rotation au second galet, lequel entraîne le second vase et, par celui-ci, la roue de sortie.

L'angle sous lequel se coupent les axes des vases et la distance de ceux-ci au point de concours des axes est approprié à la portion de tractrice choisie pour génératrice des vases, afin que les galets reliés par un arbre flexible ou articulé gardent, en se déplaçant contre leurs vases respectifs, leurs axes à très peu près alignés.

Cette condition est satisfaite d'une façon qui sera précisée ci-dessous dans l'exposé détaillé du mode de réalisation préféré.

Comme pour le premier type de variateur décrit plus haut, l'ampleur de la variation de vitesse est égale à $\rho^2$ carré du rapport des diamètres extrêmes des vases (où a lieu le point de contact moyen du galet).

Quand le galet se trouve sur le petit diamètre du vase d'entrée dont la vitesse de rotation constante est $\omega$, le vase de sortie tourne à la vitesse $\frac{\omega}{\rho}$ puisque le galet qui l'entraîne se trouve sur son grand diamètre tout en ayant la même vitesse que le galet du vase d'entrée. Puis lorsque ce galet atteint le grand diamètre du vase d'entrée, le galet du vase de sortie atteint le petit diamètre de celui-ci, et comme les galets ont la même vitesse, il entraîne le vase de sortie à la vitesse $\rho\omega$.

La variation de vitesse s'obtient en déplaçant à l'intérieur des vases l'équipage formé des deux galets et de l'arbre articulé qui les relie.

Une inclinaison convenable des axes des vases permet de combiner en un seul support le guide maintenant le galet dans le plan des axes des vases, le socle sur lequel repose le ressort (ou le vérin) servant à appuyer le galet contre le vase et le tourillon où s'articule le bras orientant le second galet de manière que son sommet virtuel soit toujours situé sur l'axe du second vase : ce support coulisse sur des glissières intérieures au premier vase et parallèles à l'axe du second vase. L'inclinaison des axes et l'espacement des vases sont déterminés de façon que l'écart entre les glissières et la section méridienne du vase qui les entoure varie peu d'une extrémité à l'autre de celle-ci. Il en résulte que le degré de compression du ressort et par suite la force d'appui du galet varie peu au cours de son déplacement. L'écartement entre les galets est déterminé par l'arbre articulé qui les relie et dont les différents tronçons font des angles variables mais très petits.

Un seul des supports est manoeuvré sur ses glissières pour obtenir le degré voulu de démultiplication. Sa position détermine celle du galet, maintenu par à l'autre support, par le truchement du bras d'orientation de ce galet. Celui-ci par l'arbre articulé qui le relie à l'autre galet en détermine la position : celle-ci peut donc varier légèrement par rapport à celle de son support ; il en résulte que le manchon dans lequel tourne l'axe du galet bouge entre les guides du support, non seulement en inclinaison mais aussi, très légèrement, dans le sens axial : Pour ne pas gêner ces mouvements les faces du manchon sont planes comme les joues du guide contre lesquelles elles glissent par l'intermédiaire de rangées de billes.

Le manchon repose par une base arrondie - en raison de son inclinaison variable - sur une plaque poussée par un ressort qui lui-même est en appui sur la base du support.

La variation de longueur du ressort - de l'ordre de 10 % - n'est pas forcément en concordance avec celle de la force d'entraînement qui doit s'exercer entre galet et vase (cette force est à son niveau minimal quand le galet roule sur le diamètre le plus large du vase d'entrée, puisque la vitesse tangentielle du vase y est la plus grande, mais elle doit être à son niveau maximal pour le galet qui roule dans cette même partie du vase de sortie puisque la vitesse tangentielle est au plus bas niveau.

Aussi, si l'on veut que la pression du galet sur le vase soit seulement suffisante pour assurer l'entraînement, il convient d'utiliser un vérin dont la pression soit modulable en fonction de la puissance à transmettre et en fonction de la position du galet.

L'intérêt du vérin par rapport au ressort réside encore dans la possibilité qu'il offre de supprimer toute pression du galet sur le vase pour pouvoir, à l'arrêt, ramener le variateur en position de démarrage. Avec le ressort il convient de faire tourner le variateur et, donc, de débrayer en aval du variateur.

Comme pour le précédent modèle de variateur, la permutation des paires vase-galet permet d'élever au carré l'amplitude de variation, qui de la valeur $\rho^2$ passe à la valeur $\rho^4$.

Les deux vases sont munis chacun, vers leurs petites extrémités proches l'une de l'autre, d'une couronne dentée engrenant avec une roue portée par un arbre commun (les engrenages sont légèrement coniques puisque les axes des vases sont un peu inclinés l'un par rapport à l'autre).

Soit D et D' d'une part, d et d' d'autre part les diamètres des couronnes d'entrée et de sortie et ceux des roues avec lesquelles elles engrènent. On observe que si $\frac{D}{d} : \frac{D'}{d'} = \rho$ et qu'en consequence $\frac{\omega_D \cdot \omega_{d'}}{\omega_{D'} \cdot \omega_d} = \frac{1}{\rho}$ ($\omega_i$ = vitesse de rotation de la roue i), à la fin du cycle du variateur alors que le galet du vase d'entrée est sur son grand diamètre et celui du vase de sortie sur son petit diamètre, $\omega_{D'} = \rho\omega_D$ et par suite $\omega_{d'} = \omega_d$. L'arbre commun est l'arbre menant. Au début du cycle, la roue d est calée sur lui. Entre les roues de diamètre d et d', est montée la roue menée. A la fin du cycle, puisque $\omega_{d'} = \omega_d$, il est possible d'enclencher sans heurt la roue d' sur l'arbre menant, on débraye la roue d et, en même temps, on la solidarise sans heurt avec la roue menée qui, jusqu'à ce moment entraînée par la roue d', tourne à la vitesse $\omega_{d'}$. Les vases d'entrée et de sortie sont échangés et, à la fin du second cycle, la vitesse du vase de sortie s'élève à la valeur $\rho^3\omega_D$ puisque celle du vase d'entrée est $\rho\omega_D$ ($\omega_D$ étant la vitesse de D lorsque d était calée sur l'arbre) alors que, au début du premier cycle, les galets étant dans les mêmes positions, elle était $\frac{\omega_D}{\rho}$. L'ampleur de la variation est bien $\rho^4$.

Pour réaliser avec précision la permutation des roues d'entrée et de sortie portées par l'arbre menant, on utilise deux crabots entraînés par cet arbre et déplacés par une tige commune coulissant dans son axe. Cette tige déplace aussi longitudinalement la roue menée, qui accroche soit l'une soit l'autre des roues d'entrée-sortie. Un électroaimant commandé par un capteur détectant l'égalité des vitesses des roues d'entrée-sortie manoeuvre la tige dans les deux sens.

**Présentation des figures**

Fig 1 - Vue schématique en coupe par son plan de symétrie principal du modèle de variateur dont les vases tournent à la même vitesse, les galets étant liés aux arbres d'entrée et de sortie, avec un dispositif de permutation des paires vase-galet.

Fig 2 -Vue partielle en perspective du modèle précédent montrant :

- le dispositif de maintien et d'appui du galet (celui-ci se trouvant à l'extrémité étroite du vase),
- le dispositif d'orientation de l'axe du galet
- le dispositif de renvoi de la rotation de l'arbre du galet au moyen d'un couple conique à axes rectangulaires associé à un couple d'engrenages hyperboliques hélicoïdaux également à axes rectangulaires

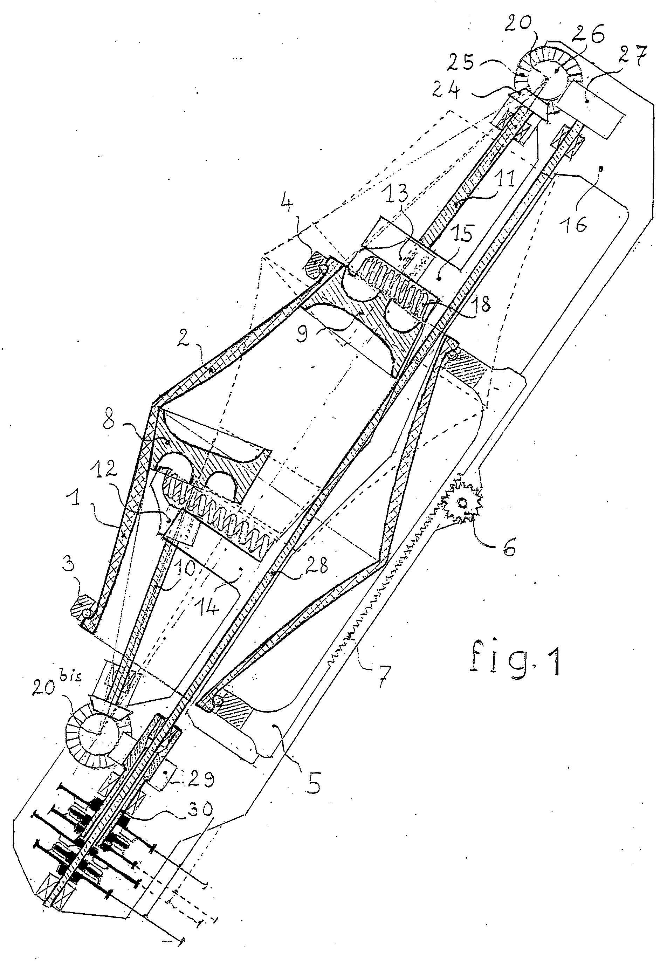

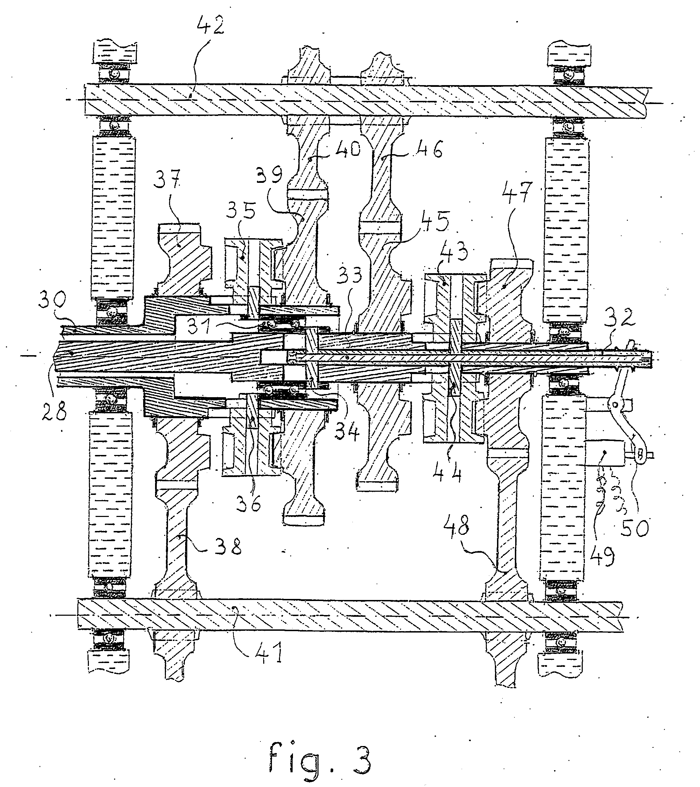

Fig 3 - Vue en coupe du mécanisme faisant partie de la fig. 1 qui autorise la permutation en douceur des paires vase-galet pour élever au carré l'amplitude de la variation. Les arbres d'entrée ou sortie, coaxiaux, sont alternativement connectés à l'arbre menant et à l'arbre mené.

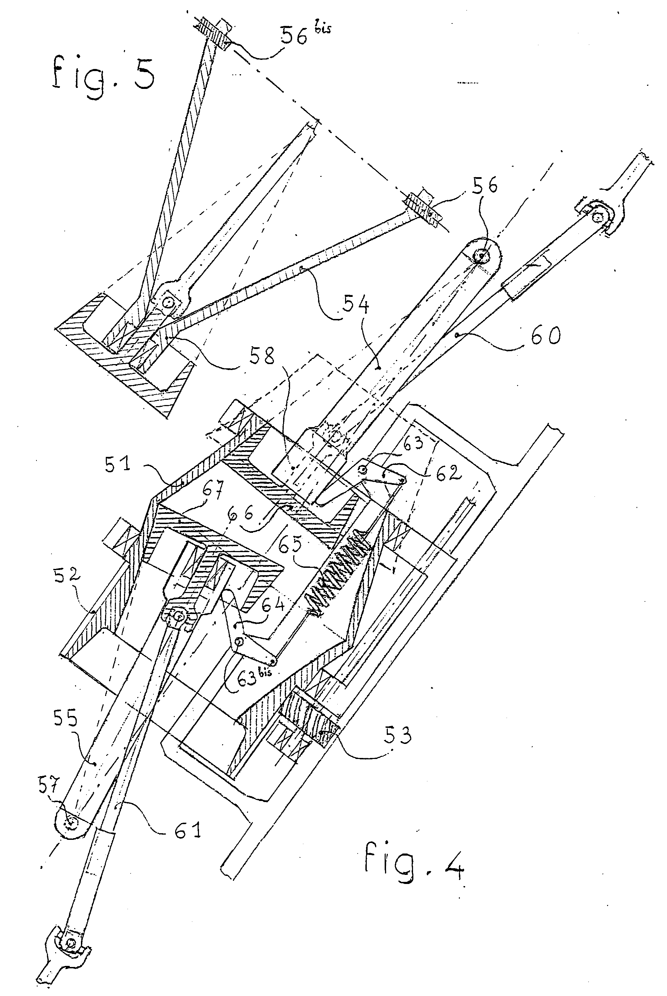

Fig 4 - Variante du modèle de variateur représenté par la fig 1. Ici ce sont les vases qui sont moteurs et les galets entraînent deux arbres qui peuvent subir des déplacements angulaires, par exemple s'ils entraînent les roues d'un véhicule. Cet appareil fonctionne comme différentiel, à variation commandée.

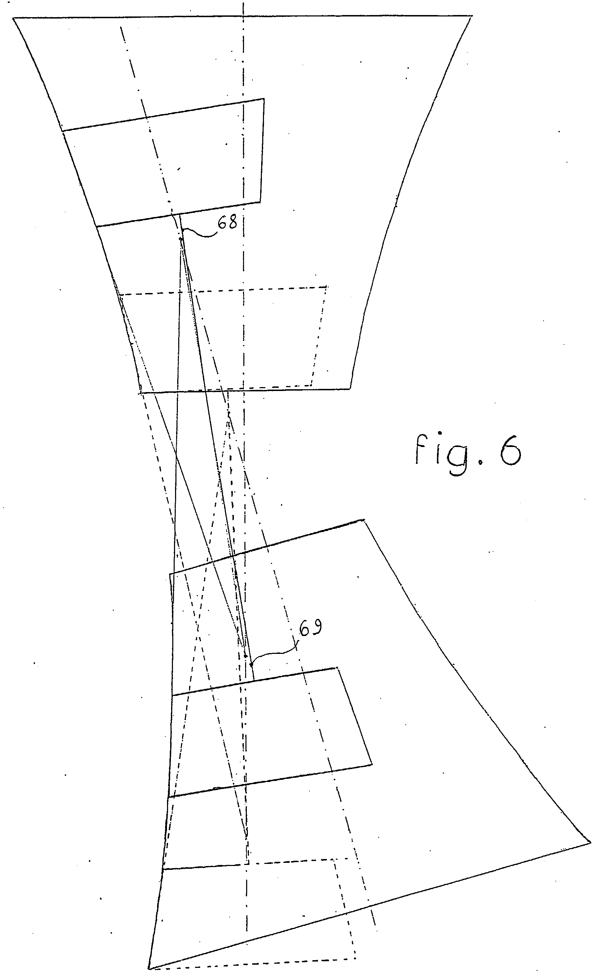

Fig 5 - Cette vue, complémentaire de la fig. 4, montre comment le galet est à la fois orienté et maintenu latéralement par les bras de guidage.

Fig 6 - Dessin précisant la disposition des vases quand ils sont séparés, l'un entraîneur, l'autre entraîné - alors que leurs galets sont reliés, tournant à la même vitesse.

L'angle des axes des vases et la distance aux vases de leur point de rencontre ont été déterminés pour que les axes des galets soient confondus à très peu près (tout à fait quand leurs positions à l'intérieur des vases sont extrêmes et à 1° près quand elles sont intermédiaires). comme le montre le dessin.

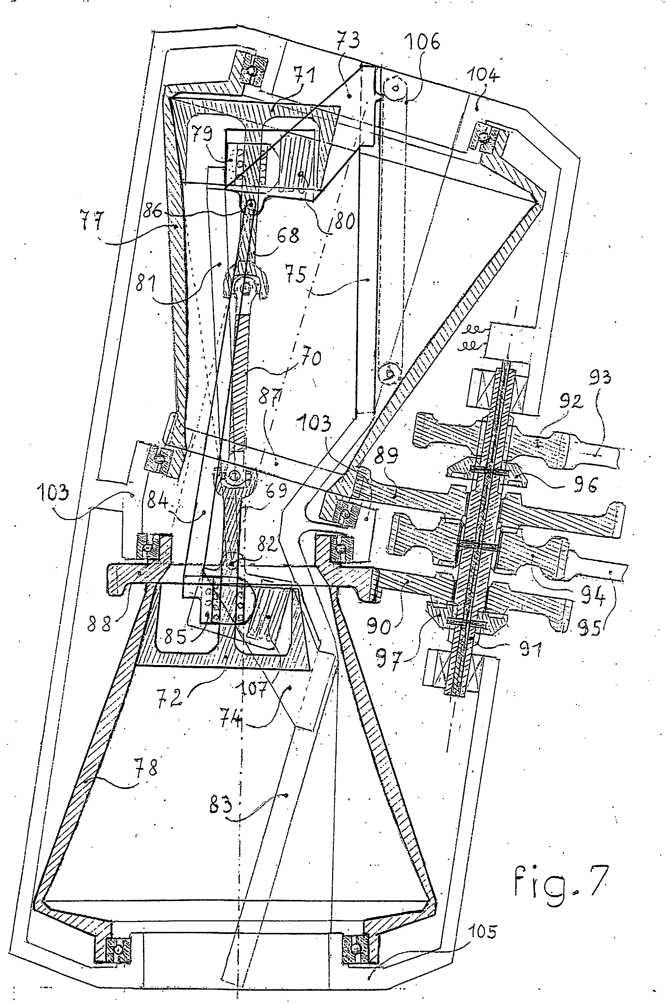

Fig 7 - Vue schématique, en coupe par son plan de symétrie principal, du modèle de variateur de vitesse dont les galets tournent à la même vitesse, les vases engrenant avec des roues d'entrée et de sortie et muni du dispositif de permutation des paires vase-galet.

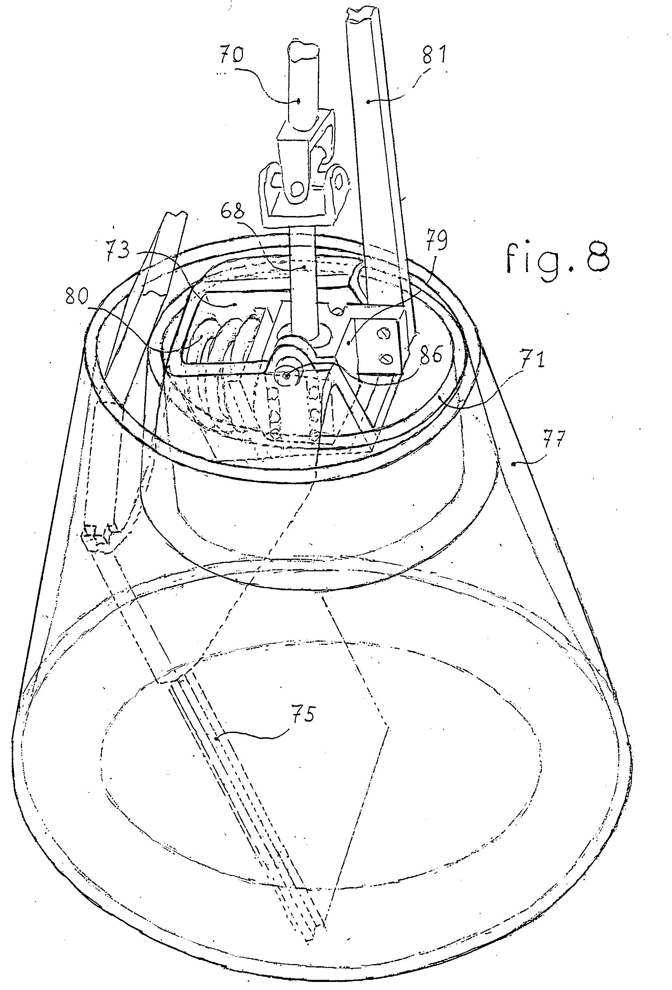

Fig 8 - Vue partielle, en perspective, du modèle précédent, montrant le dispositif, monté sur glissières, de maintien latéral et d'appui du galet, avec le bras servant à orienter l'axe du galet et le tourbillon où s'articule le bras guidant l'autre galet.

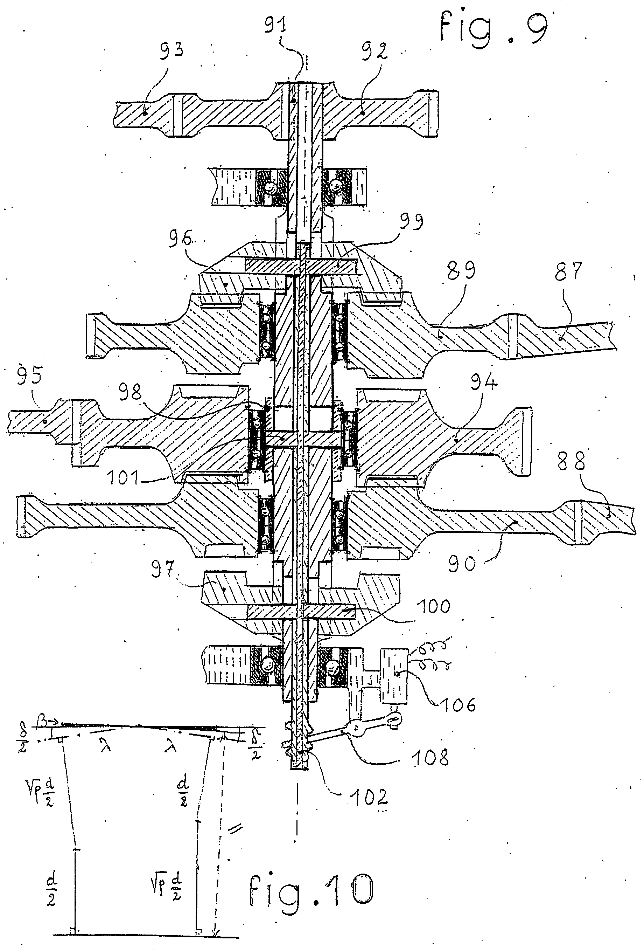

Fig 9 - Vue en coupe d'un mécanisme faisant partie de la fig. 7 qui réalise la permutation en douceur des paires vase-galet pour élever au. carré l'amplitude de la variation. Les roues d'entrée et de sortie sont alternativement calées sur l'arbre menant ou sur la roue menée qui lui est concentrique

Fig 10 - Dessin permettant d'établir l'équation donnant l'angle que fait l'axe du dispositif de permutation de la fig. 9 avec la bissectrice de l'angle des axes des vases.

**EXPOSE DETAILLE**

L'exposé qui suit reprend les descriptions précédentes dans les cas illustrés par les figures indiquées ci-dessus. Sauf dans le cas du différentiel, la portion de tractrice choisie comme méridienne du vase ainsi que le diamètre moyen et la hauteur du tronc de cône qui constitue le galet - exprimés en valeur relative par rapport à la longueur de la tangente à la tractrice, mesurée entre le point de contact et l'asymptote - ont été précisés dans la description générale de l'invention.

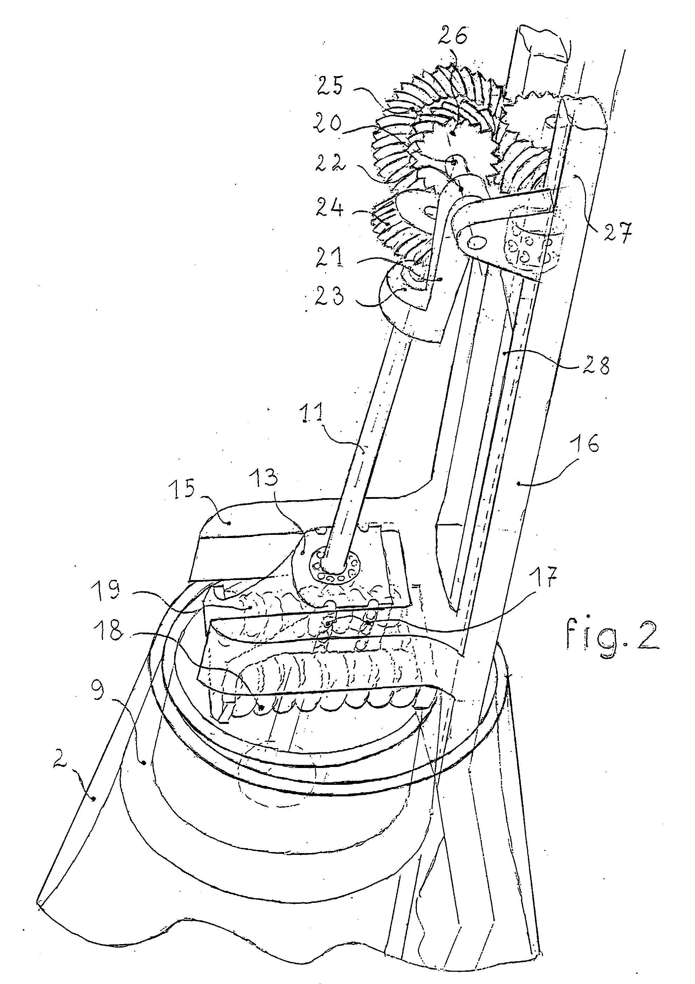

Modèle de variateur à vases accouplés et se déplaçant axialement - Fig 1, 2 et 3

Les vases (1, 2) accolés par leur large extrémité tournent, portés par des roulements à billes (3, 4), sur un chariot (5) qui se déplace, parallèlement à l'axe commun des vases, au moyen d'une roue dentée (6) et d'une crémaillère (7), sur les glissières du châssis (16) de l'appareil.

Les galets (8, 9) dont l'un entraîne les vases et l'autre est entraîné par eux, sont solidaires d'arbres de transmission (10, 11). Ces arbres tournent, par l'intermédiaire de roulements, à l'intérieur de boîtiers (12, 13) qui sont maintenus latéralement par les guides (14, 15), solidaires du châssis, de façon que les axes des galets et l'axe commun des vases soient coplanaires.

Les guides permettent le débattement des boîtiers parallèlement au plan formé par ces axes. Des rangées de billes (17) interposées entre boîtier et guide le facilitent.

Le boîtier présente un bossage contre lequel appuient deux ressorts (18, 19) - ou vérin - soutenu par le châssis, qui appliquent avec force le galet contre le vase.

L'axe du galet (9) est orienté vers un point fixe (20) situé sur l'axe des vases et qui est le sommet virtuel du cône dans lequel le galet est inscrit. Cette orientation est assurée au moyen du bras (21), pivotant autour de la perpendiculaire (22) menée par ce point fixe 20 au plan commun des axes des vases et des galets. L'arbre du galet tourne dans un manchon (23) attenant au bras, et se termine par une roue dentée conique (24) engrenant avec une autre roue conique (25) coaxiale à l'axe (22). Cet axe porte une roue cylindrique (26) à dentures d'engrenage hyperboloïde hélicoïdal accolée à la roue 25 et qui engrène avec une roue (27) qui lui est semblable mais d'axe parallèle à celui des vases.

Un arbre (28) issu de cette roue et traversant l'espace intérieur aux vases rejoint le mécanisme de permutation des paires vase-galet.

Le galet (8) est orienté vers le point fixe (20 bis) situé sur l'axe des vases à une distance égale à 264 (100 était la longueur T) de son homologue, le point fixe (20), distance déterminée pour qu'un galet se trouve sur le grand diamètre de son vase quand l'autre galet se trouve sur le petit diamètre de l'autre vase.

Une roue (29) homologue de la roue (27) est liée cinématiquement au galet (8) par les mêmes sortes d'organes : roue d'engrenage hyperboloïde hélicoïdal et couple de roues coniques. Les valeurs des démultiplications des deux trains de roues d'engrenage sont identiques. Elle est telle, en général, que les galets tournent plus vite que les arbres coaxiaux d'entrée ou de sortie du variateur.

L'arbre (30) issu de la roue (29) est coaxial à l'arbre (28) qui lui est intérieur. Cette disposition est souhaitable pour la réalisation du mécanisme de permutation, décrit ci-après.

L'arbre (30) s'appuie à son extrémité sur l'arbre (28) par un roulement à billes (31) monté à "frottement doux" sur ces deux arbres. Une tige (32) cylindrique peut coulisser de façon coaxiale à l'intérieur de l'arbre (28) dont elle dépasse l'extrémité. Cette tige est constituée de parties annulaires et d'une partie centrale (33) pour pouvoir y fixer perpendiculairement deux barrettes qui traversent l'arbre (28) par les fentes qui y ont été pratiquées afin de leur permettre un mouvement de va et vient. L'une de ces barrettes (34) entraîne en translation axiale le roulement (31).

L'arbre (30) porte un crabot (35) qui peut coulisser sur lui tout en étant entraîné dans sa rotation par des cannelures : des clavettes (36) relient le roulement (31) au crabot (35) à travers des fentes pratiquées dans l'arbre (30). Le mouvement axial de la tige (32) peut ainsi être communiqué au crabot (35) bien que la tige et le crabot ne tournent pas à la même vitesse.

Le crabot (35) présente une denture sur ses deux faces. Sur l'arbre (30) et de part d'autre du crabot deux roues dentées (37, 39) sont calées dans le sens axial mais libres de tourner autour de l'arbre. Selon la position que lui a communiquée la tige de commande (32), le crabot entraîne l'une ou l'autre des roues (37, 39). La première (37) engrène avec une roue (38) solidaire de l'arbre menant (41) ; la seconde (39) engrène avec une roue (40) solidaire de l'arbre mené (42).

En parfaite simultanéité avec le crabot (35), le crabot (43) porté par l'arbre (28) et manoeuvré par la seconde barrette (44) fixée à la tige de commande (32) s'engage, selon sa position longitudinale, soit dans la roue (45) engrenant avec une roue (46) solidaire de l'arbre mené (42) soit dans la roue (47) engrenant avec une roue (48) solidaire de l'arbre menant (41). Les roues (37 et 45) d'une part, les roues (39 et 47) d'autre part sont disposées de façon que les crabots simultanément déconnextent les unes et calent les autres sur leurs arbres respectifs.

Il est prévu que la permutation ait lieu lorsque le variateur a effectué un cycle : la vitesse de l'arbre de sortie (28) ayant crû de la valeur $\frac{\omega}{\rho}$ à $\omega\rho$, $\omega$ étant la vitesse de l'arbre d'entrée (30).

L'arbre de sortie (28) peut devenir sans heurt arbre d'entrée : en effet par la connexion de la roue (47) sur cet arbre, l'arbre menant (41) l'entraînera à une vitesse supérieure à la sienne d'un facteur $\rho$ donc à la vitesse $\omega\rho$ alors qu'il entraînait l'arbre (30) à sa propre vitesse, car, D étant le diamètre d'une roue, $\frac{D_{48}}{D_{47}} = \rho$ alors que $\frac{D_{38}}{D_{37}} = 1$

Par ailleurs, l'arbre (30) peut devenir sans heurt l'arbre de sortie : en effet par la connexion de la roue (39) sur cet arbre, l'arbre (42) sera mené à une vitesse supérieure à celle de cet arbre d'un facteur $\rho$ soit à la vitesse $\omega\rho$ alors qu'elle était égale à celle de l'arbre (28)

En effet $\frac{D_{45}}{D_{46}} = 1$ alors que $\frac{D_{39}}{D_{40}} = \rho$

La vitesse de l'arbre menant étant $\omega$, celle de l'arbre mené au cours des deux cycles de variation sera passé de la valeur $\frac{\omega}{\rho}$ à $\omega\rho^3$.

Un dispositif (49) commande, par l'intermédiaire d'une fourchette (50), le déplacement de la tige (32). Un mode de déclenchement électrique paraît bien adapté, basé sur la comparaison des vitesses de deux roues - par ex (37 et 39) - qui doivent être égales à l'instant de la permutation.

Un autre modèle de variateur à vases accouplés se déplaçant le long de leur axe commun est l'objet des figures 4 et 5.

Il s'agit d'un différentiel qui pourrait correspondre à un type courant de véhicule, dont seules les roues avant-motrices sont orientables, le diamètre de giration considéré est 10 m, alors que la voie des roues avant est 1,4 m et l'empattement 2,5 m. Dans ces conditions la variation maximale de la vitesse de rotation des roues avant, produite par leur braquage extrême, est de ± 13 %. Valeur calculée en admettant que l'orientation de chaque roue est telle que les axes des deux roues se croisent sur l'axe commun des roues arrière, au centre instantané de rotation. En conséquence, l'angle de braquage de la roue intérieure au virage doit être plus grand que celui de la roue extérieure. Le différentiel représenté offre donc une amplitude de variation de 30 %.

Le dispositif est sensiblement celui décrit ci-dessus, à cette différence près que le couple des deux vases a une vitesse de rotation commandée non par l'un des galets mais par un moteur et que les arbres issus des galets sont tous les deux des arbres de sortie. Comme la portion de tractrice nécessaire pour obtenir sur chaque galet la variation de vitesse maximale (± 13 % par rapport à la valeur médiane) est plus courte que celle proposée pour un variateur ($\rho$ = 1,30 contre $\rho$ = 1,78) il est possible d'adapter des galets de plus grand diamètre.

Les caractéristiques et dimensions du vase et du galet sont les suivantes, pour une longueur égale à 100 du segment de tangente compris entre le point de contact et l'asymptote (qui est aussi la longueur de la génératrice du cône entre sommet et cercle médian du galet) :

- angle de la tangente avec l'axe : point de contact médian 18,5°, points de contact extrêmes 20,9° et 16°.
- galet : angle au sommet 25° - diamètre du cercle médian 43,75, longueur comptée sur la méridienne 20
- vase : longueur 43,7 - diamètres minimal 50 et maximal 77,5.

Les différences de structure avec le variateur décrit ci-dessus portent sur les dispositifs de maintien, d'orientation et d'appui des galets, et proviennent de ce que les arbres entraînés par les galets doivent pouvoir prendre une inclinaison variable car leur extrémité côté roue suit en hauteur la position du moyeu de la roue, position qui varie du fait de la souplesse de la suspension. D'autre part, la plus grande ouverture du vase permet une conception différente des guides de maintien et du dispositif d'appui.

Le double vase (51) porte une couronne à denture cylindrique hélicoïdale (52) qui engrène avec une roue du même type et d'axe parallèle (53), par laquelle est transmise aux vases la puissance du moteur, avec un rapport de démultiplication d'environ 4 selon le dessin (mais qui pourrait facilement être plus élevé).

La largeur de la couronne dentée autorise le déplacement longitudinal des vases, engendrant la différenciation des vitesses.

Avec un tel dispositif la vitesse moyenne des roues en position de braquage maximal est très légèrement supérieure (2 %) à la vitesse, égale pour les deux roues, en l'absence de braquage.

Les galets (66, 67) ont leur axe d'une part orientés vers les points fixes, sommets des cônes dans lesquels ils sont inscrits, et d'autre part, maintenus dans un même plan fixe au moyen de bras (54, 55). Chaque bras est articulé à deux tourillons (56, 56[bis] et 57, 57[bis]) largement écartés et dont l'axe commun est la perpendiculaire au plan des axes issue du point fixe. Les deux branches du bras se réunissent en un manchon (58) à moitié intérieur au galet dont il entoure l'arbre par l'intermédiaire d'un roulement. Cette forme en V du bras répond au besoin d'une bonne rigidité de cet organe de maintien latéral et permet à l'arbre (60, 61) de transmission entre la roue et le galet de s'articuler sur l'arbre que porte le galet au plus près de celui-ci, afin de réduire l'encombrement de l'appareil.

Le dispositif d'appui du galet contre le vase applique l'effort le plus près possible du centre du galet. A cette fin des leviers (62, 63) pivotant autour d'axes (63, 64) portés par le châssis appuient sur les manchons. Ces leviers sont sollicités par un ressort commun (65) (ou un vérin) situé à l'intérieur du vase et tendu entre leurs extrémités. On voit par l'inclinaison des leviers que la force d'appui est d'autant plus grande que le galet roule sur une petite circonférence du vase.

Lors du braquage, le véhicule étant à l'arrêt, le déplacement des galets peut présenter une certaine résistance à moins que l'appui des galets soit assuré par un vérin et par conséquent réglable en intensité. Toutefois, la tendance de chaque galet à se déplacer vers la fin du vase de plus grand diamètre, satisfaite pour l'un et contrariée pour l'autre, stabilise l'effort de braquage.

Modèle de variateur où les galets, reliés entre eux, communiquent le mouvement d'un vase entraîneur à l'autre vase entraîné (Fig. 6, 7, 8 et 9). Ces vases ont leurs axes concourants légèrement inclinés et leurs extrémités étroites se font face : de cette disposition, il résulte que les galets gardent, au cours de leur déplacement, leurs axes très sensiblement confondus.

La figure 6 montre la géométrie de ce modèle : les axes des vases font un angle de 15,5°, tandis que la distance de leur point de rencontre au plan de la section droite de chaque vase, sur laquelle se trouve le point de contact du galet le plus proche, est égale à 25 (pour une valeur égale 100 du segment de tangente au vase compris entre l'axe et le point de contact).

Les dimensions du vase sont celles énoncées dans la description générale ainsi que les dimensions du galet. La distance entre les centres des faces internes - se regardant - des galets est 93,3.

On voit sur la figure 6 que les axes des galets sont confondus, lorsque ceux-ci se trouvent aux extrémités des vases, alors qu'ils sont très légèrement distincts (68, 69), faisant un angle de 1° environ pour une position médiane. Mais comme ces axes, se coupent en un point dont la position est variable sur chacun d'eux, il convient de réunir les galets soit par un arbre d'une seule pièce mais légèrement flexible soit par trois arbres rigides : deux arbres courts solidaires des galets et de mêmes axes qu'eux et un troisième articulé aux précédents par des joints flexibles - une liaison à la cardan n'étant pas nécessaire étant donné que les angles faits par les arbres atteignent au plus ½ degré.

La figure 7 montre de façon schématique la structure de l'appareil auquel est adjoint un dispositif de permutation des paires vase-galet, permettant d'élever au carré l'amplitude de la variation de vitesse de l'appareil.

Les articulations entre les trois parties (68, 69, 70) de l'arbre qui relie les galets (71, 72) sont représentées dans ce dessin comme étant du type à la cardan - à titre indicatif.

Les supports (73, 74) des galets coulissent sur des glissières parallèles aux axes des vases. Les glissières (75) qui se trouvent à l'intérieur du vase (77) sont parallèles à l'axe du vase (78), mais l'angle des axes est tel que la droite d'intersection du plan des glissières par le plan de symétrie de l'appareil - qui lui est perpendiculaire - est sensiblement parallèle à la section méridienne du vase (77) selon ce plan.

L'arbre (68) du galet (71) tourne, à l'intérieur d'un roulement, dans un boîtier (79) maintenu latéralement (c'est-à-dire perpendiculairement au plan de symétrie de l'appareil contenant les axes des vases et des galets) par le support (73) dont la plate-forme supporte le ressort (80) ou le vérin qui par l'intermédiaire du boîtier applique le galet (71) contre le vase (77) : la variation de longueur du ressort est de l'ordre de 10 % seulement du fait du quasi-parallélisme signalé au paragraphe précédent. En revanche l'inclinaison du galet par rapport à son support subit une variation notable, aussi la base du boîtier qui repose sur la tête du ressort a t-elle la forme d'un segment de cercle. Au boîtier est rigidement fixé un bras (81) qui s'articule sur un tourillon (82) solidaire de l'autre support (74).

Ce tourillon se déplace, comme ce dernier support, parallèlement aux glissières (83) intérieures au vase (78) et donc parallèlement à l'axe du vase (77) : plus précisément dans le plan mené par cet axe perpendiculairement au plan contenant les axes des vases et ceux des galets. On voit donc que pour une longueur adéquate du bras, le galet (71) est orienté, par l'intermédiaire du boîtier dans lequel tourne son arbre, de façon à ce que le sommet du cône qui lui est circonscrit réside toujours sur l'axe du vase (77).

Réciproquement le bras (84) fixé au boîtier (85) dans lequel tourne l'arbre du galet (72) et articulé au tourillon (86) du support (73) oriente en permanence le galet de façon que le sommet virtuel du cône qui lui est circonscrit soit sur l'axe du vase (78).

Le ressort (107) du support (74) applique le galet (72) contre le vase (78).

Le châssis de l'appareil a été représenté schématiquement. Les deux glissières (75, 83) sont réunies à un anneau central (103) portant les roulements à billes de maintien des vases à leurs petites extrémités et sont fixées aussi aux fonds (104, 105) qui portent également les roulements de maintien des vases à leurs grandes extrémités. Le déplacement des galets est commandé par entraînement d'un des supports (73) - par ex. au moyen d'une chaîne (106) défilant le long des glissières (75).

Le support, par son tourillon (86) et le bras (84), manoeuvre le galet (72) lequel tire ou pousse le galet (71) par la ligne d'arbres (69, 70, 68).

La figure 8 est une vue partielle mais en perspective : vase, galet, organes de maintien, d'appui et d'orientation avec les mêmes numéros de référence que ceux indiqués dans la partie supérieure de la figure 7.

Chaque vase est solidaire d'une couronne dentée (87, 88) entourant sa petite extrémité et engrenant avec une roue (89, 90) centrée sur un arbre commun (91). Cet arbre est solidaire de la roue (92) qu'il porte et qui engrène avec une roue motrice (93). Entre les deux roues (89 et 90) et également centrée sur l'arbre (91), est placée une roue (94), libre de coulisser longitudinalement et de tourner indépendamment de l'arbre. Cette roue, suivant sa position longitudinale sur l'arbre peut accrocher, à la façon d'un crabot, soit la roue (89) soit la roue (90) et s'en rendre solidaire, tandis qu'elle engrène de façon permanente avec une roue (95) qui transmet le mouvement dont la vitesse a été modifiée par le variateur. La largeur de la denture de la roue (94) lui permet, malgré son déplacement latéral, de rester en contact avec la roue (95) sur toute la largeur de sa propre denture.

La permutation consiste, au moment voulu, à désolidariser l'une des roues (89, 90) de l'arbre (91) pour caler l'autre après avoir décroché celle-ci de la roue (94) pour y accrocher la roue libérée. Pour que la permutation - qui consiste à échanger les vases d'entrée et de sortie au moment où un cycle de variation est accompli afin de le reprendre en sens contraire - se fasse sans discontinuité de vitesse, ni heurt, nous avons vu que, si D est le diamètre de la couronne d'entrée, d celui de la roue qui lui est associée sur l'arbre commun, D' celui de la couronne de sortie et d' celui de la roue associée, il convient que :

$$\frac{D}{d} : \frac{D'}{d'} = \rho$$

Dans le cas de la figure 7,

$$D = \sqrt{\rho}.d$$

et

$$D' = \frac{1}{\sqrt{\rho}}\, d' :$$

la relation précédente est satisfaite.

($\sqrt{\rho} = \frac{4}{3}$, nombre rationnel, est donc un rapport de démultiplication réalisable par engrenage).

Soit $\omega$ la vitesse de l'arbre commun (menant). Au début du premier cycle, la vitesse du vase d'entrée est

$$\frac{\omega}{\sqrt{\rho}},$$

celle du vase de sortie

$$\frac{\omega}{\rho\sqrt{\rho'}},$$

celle de la roue de sortie $\frac{\omega}{\rho}$.

A la fin du second cycle, la vitesse du vase d'entrée (ex vase de sortie) est $\omega\sqrt{\rho}$, celle du vase de sortie (ex vase d'entrée) $\omega\rho\sqrt{\rho}$ et celle de la roue de sortie $\omega\rho^2$. Si l'on désire utiliser le même module de dent pour les roues dentées D, D', d, d' une solution simple consiste à choisir : $D = d' = \sqrt{\rho}d$ d'où $D' = d$ (puisque

$$D' = \frac{d'}{\sqrt{\rho}}\ )$$

(Cas de la figure 7)

En ce cas l'arbre (91) ne peut être tout à fait parallèle à la bissectrice de l'angle $\delta$ que font les axes des vases. Si $\beta$ est l'angle que fait l'arbre (91) avec cette bissectrice, et si $\lambda$ est la distance du centre de chaque couronne avec le point d'intersection des axes des vases, on a la relation suivante qui permet de déterminer $\beta$ (voir figure 10).

$$\lambda \sin\left(\frac{\delta}{2} - \beta\right) + \frac{d}{2}\cos\left(\frac{\delta}{2} - \beta\right) + \sqrt{\rho}\,\frac{d}{2} = \lambda \sin\left(\frac{\delta}{2} + \beta\right) + \sqrt{\rho}\cdot\frac{d}{2}\cos\left(\frac{\delta}{2} + \beta\right) + \frac{d}{2}$$

Dans le cas de figure 7 : $\frac{2\lambda}{d} = 0{,}59$ $\qquad \delta = 15{,}5°\ \sqrt{\rho} = \frac{4}{3}\ \beta \approx 0{,}2°$

Les engrenages de D avec d et D' avec d' comportent des roues dentées coniques.

La figure 9 présente le dispositif de permutation seul.

Etant donné que les différentes roues (sauf la roue motrice) sont sujettes à tourner sur l'arbre alors qu'elles exercent un effort de transmission, elles lui sont reliées par des roulements à billes susceptibles d'ailleurs de supporter des efforts longitudinaux provenant soit des crabots soit des roues entre elles.

Les crabots (96, 97) ainsi que la bague (98) peuvent être déplacés longitudinalement sur l'arbre (91) par des barrettes (99, 100, 101) fixées à une tige (102) centrale et coaxiale à l'arbre qui va au-delà de son extrémité. Ces barrettes traversent l'arbre par des fentes qui y sont ménagées, mais tournent avec lui ainsi que la tige. La bague (98) supporte la roue de sortie (94) qui est donc déplacée avec elle.

On voit d'après les positions relatives des roues et des crabots que selon l'enfoncement plus ou moins prononcé de la tige à l'intérieur de l'arbre, les crabots et la bague qui sont manoeuvrés ensemble font soit que la roue (89) est calée sur l'arbre (91) d'entrée, tandis que la roue (90) est embrayée avec la roue (94) de sortie, soit l'inverse : roue (90) calée sur l'arbre, roue (89) embrayée avec la roue de sortie (94).

Un dispositif, par exemple électrique (106), captant les vitesses des roues (89) et (90) déclenche, à l'instant où elles deviennent égales, la manoeuvre de la tige par l'intermédiaire de la fourchette (108).

La tige (102) comporte une tringle centrale sur laquelle sont enfilées les barrettes (99, 100, 101) et des tronçons de tube pour caler longitudinalement ces mêmes barrettes.

**Revendications**

**1.** Dispositif de variation continue de vitesse comprenant :

- un corps creux de révolution, appelé "vase", dont la surface interne est une portion d'une courbe présentant son côté convexe vers l'axe de révolution,
- un corps de révolution appelé "galet", de forme tronconique, prolongé par un arbre qui lui est coaxial,
- des moyens pour appliquer le galet contre la surface interne du vase, pour guider l'axe du galet de façon qu'il coupe l'axe du vase, pour que le plan formé par les axes des deux corps soit fixe, pour que la position du galet à l'intérieur du vase puisse être modifiée afin de faire varier de façon continue le rapport de leurs vitesses de rotation, pour établir la liaison cinématique du vase et du galet avec des arbres d'entrée et de sortie, caractérisée :
- en ce que la courbe engendrant la surface interne du vase est une Tractrice dont l'axe du vase est l'asymptote,
- en ce que le segment de génératrice du cône dans lequel est inscrit le galet, compris entre le sommet et la circonférence médiane du galet, a sa longueur égale à celle, T, constante pour une Tractrice, du segment de tangente à cette courbe, compris entre le point de contact et l'asymptote,
- en ce que le moyen de guidage du galet est tel qu'il maintient le sommet virtuel de son cône sur l'axe du vase,
- en ce que la surface interne du vase est légèrement élastique,
- en ce que la surface du galet est indéformable,
- en ce que la force d'appui du galet contre le vase est telle que par une légère déformation de la surface de celui-ci, une aire de contact s'établisse entre les deux corps qui ait, au plus, pour longueur la largeur du galet.

Toutes ces conditions étant réunies pour que les deux corps s'entraînent l'un l'autre en rotation, par friction, sans glissement au moins sur la ligne de contact située dans le plan de leurs axes et pour que le rapport de leurs vitesses de rotation soit proportionnel seulement à la distance à l'axe du vase au point de contact du galet avant appui, ce rapport ne dépendant qu'extrêmement peu de la largeur du galet mise en contact par appui.

**2.** Dispositif selon la revendication 1, caractérisé :

- en ce que la portion de la courbe appelée Tractrice utilisée, en totalité ou en partie, définie par les points de contact extrêmes du milieu du galet, correspond aux angles $\alpha_1 = 13,2°$ et $\alpha_2 = 24°$, $\alpha$ étant l'angle que fait en ces points la tangente à la courbe avec l'axe du vase, de sorte que le rapport maximal $\rho$ des vitesses de rotation du galet, pour une vitesse donnée du vase, atteint $\frac{16}{9}$,
- en ce que la hauteur du tronc de cône constituant le galet, rapportée à la longueur T du segment de tangente précité, est voisin de 0,2, tandis que l'angle au sommet du cône dans lequel le galet est inscrit est voisin de 21°.

**3.** Dispositif selon la revendication 1, caractérisé :

- en ce que deux vases identiques (1, 2) sont accolés par leur grande extrémité et peuvent être déplacés par rapport au châssis, parallèlement à leur axe commun,
- en ce que les arbres (10, 11) issus des deux galets (8, 9) sont orientés chacun au moyen d'un bras (21) pivotant dans un plan donné autour d'un point fixe du châssis, situé sur l'axe des vases,
- en ce qu'une poutre, solidaire du châssis (16) et traversant les vases, offre deux supports (14, 15) dans lesquels peuvent glisser et pivoter les paliers (12, 13) qui portent les arbres des galets au plus près de ceux-ci, qui maintiennent leurs axes dans un plan fixe et qui leur transmettent les forces d'appui appliquées par des ressorts (18) ou des vérins fixés à la poutre.
- en ce que la rotation des arbres des galets est communiquée à un arbre d'entrée et à un arbre de sortie, par des couples d'engrenages coniques (24, 25) dont les sommets sont confondus avec les points fixes précités,
- en ce que la distance entre ces points fixes est telle que lorsqu'un galet, au terme de la translation du couple des vases, se trouve à l'une des extrémités d'un vase, l'autre galet se trouve à l'extrémité opposée de l'autre vase, de sorte qu'entre les deux positions extrêmes du couple des vases, la variation du rapport des vitesses des galets atteint la valeur $\rho^2$.

**4.** Dispositif selon la revendication 1 caractérisé :

- en ce que les deux galets sont reliés par leurs arbres au moyen d'un arbre intermédiaire articulé par des joints homocinétiques, ou par un arbre commun acceptant une légère flexion,
- en ce que les vases, identiques, sont séparés, mais d'axes concourants et portent chacun une couronne dentée qui engrène avec une roue d'un arbre menant pour l'un, d'un arbre mené pour l'autre,
- en ce que la longueur des arbres ou de l'arbre reliant les galets est telle que, lorsque l'un se trouve à l'une des extrémités du vase qui lui est associé, l'autre galet se trouve à l'extrémité opposée de l'autre vase, de sorte que l'amplitude de la variation du rapport des vitesses des deux vases peut atteindre la valeur $\rho^2$.

**5.** Dispositif selon les revendications 1 et 4, caractérisé :

- en ce que les vases (77, 78) se regardant par leur petite extrémité, sont inclinés et écartés l'un par rapport à l'autre de façon que les axes des galets demeurent presque alignés au cours de leur déplacement,
- en ce que les galets sont identiques,
- en ce que l'angle des axes est très voisin de la valeur $\alpha_1 + \alpha_2 - \delta$, $\delta$ étant l'angle au sommet du cône des galets - valeur qui assure le parallélisme des axes des galets lorsqu'ils se trouvent en positions extrêmes - et que l'écartement est très voisin de celui nécessaire pour obtenir la coïncidence de ces axes pour ces mêmes positions des galets,
- en ce que, pour le vase et le galet objets de la revendication 2, les axes des vases font un angle de 15°5 et la distance de leur intersection au plan de la section droite du vase, sur laquelle se trouve le point de contact médian du galet à la petite extrémité, est égale à 0,25 T,
- en ce que deux poutres (75, 83), solidaires du châssis (103) et traversant l'un ou l'autre vase, servent de coulisses à deux supports (73, 74) dans lesquels peuvent glisser et pivoter les paliers (79, 85) qui portent les arbres des galets au plus près de ceux-ci, qui maintiennent leurs axes dans un plan fixe et qui leur transmettent les forces d'appui appliquées par des ressorts (80, 107) ou des vérins fixés aux supports.
- en ce que le support du premier galet coulisse parallèlement à l'axe du second vase - et réciproquement - et qu'il comporte un tourillon (86) où s'articule un bras (84) lié rigidement au palier du second galet et de longueur appropriée, de sorte que le sommet virtuel de ce galet est maintenu sur l'axe du second vase; et en ce que, réciproquement, le support du second galet comporte un tourillon (82) où s'articule un bras (81) lié rigidement au palier du premier galet et de longueur appropriée, de sorte que le sommet virtuel de ce galet est maintenu sur l'axe du premier vase.

**6.** Dispositif selon les revendications 1, 3 ou 5 caractérisé :

- en ce que les galets sont identiques
- en ce que, si D et D' sont les diamètres soit des roues calées sur les arbres reliés aux galets, s'agissant du variateur objet de la revendication 3, soit des couronnes portées par les vases, s'agissant de la revendication 5, si d et d' sont les diamètres des roues portées par l'arbre menant ou mené, la relation $\frac{D}{d} \cdot \frac{D'}{d'} = \rho$ est satisfaite à la fois pour ces deux arbres,
  permettant d'opérer sans discontinuité de vitesse la permutation des organes d'entrée et de sortie du variateur lorsque la vitesse maximale est atteinte en sortie et ayant pour effet d'élever au carré, c'est-à-dire à la valeur $\rho^4$ l'amplitude de la variation possible.

**7.** Dispositif selon les revendications 3 et 6, comportant un mécanisme de permutation des galets d'entrée et de sortie, caractérisé :

- en ce que les arbres d'entrée ou de sortie (28, 30) sont coaxiaux grâce à des jeux d'engrenage, par exemple de type hyperbolique-hélicoïdal (26, 27), accouplés aux engrenages coniques des arbres des galets,
- en ce que l'arbre menant (41) et l'arbre mené (42) engrènent chacun avec deux roues (38, 48 et 40, 46) l'une portée par l'un des arbres d'entrée-sortie, l'autre portée par l'autre arbre,
- en ce qu'une seule roue à la fois de l'arbre menant et de l'arbre mené est calée sur un arbre d'entrée-sortie, et que les arbres d'entrée-sortie concernés sont différents,
- en ce que la permutation des roues à caler est effectuée par le déplacement longitudinal d'une tige (32), coaxiale et intérieure aux arbres d'entrée-sortie (eux-mêmes coaxiaux) agissant simultanément sur le crabot (35, 43) de chacun de ces arbres, celui de l'arbre extérieur étant manoeuvré par l'intermédiaire d'un roulement à billes (31) faisant fonction d'entretoise entre ces arbres et coulissant par sollicitation de la tige,
- en ce que la manoeuvre de la tige est éventuellement assujettie à l'observation de l'égalité des vitesses des roues portées par le même arbre d'entrée-sortie.

8. Dispositif selon les revendications 5 et 6, comportant un mecanisme de permutation des vases d'entrée-sortie caractérisé :

   - en ce que les roues (89, 90) engrenant avec les couronnes dentées des vases sont alternativement calées sur l'arbre menant (91) chacune par un crabot (96, 97), les deux crabots étant manoeuvrés simultanément par une tige coaxiale (102) et intérieure à l'arbre menant,
   - en ce que la tige déplace, en même temps une bague (98) entourant l'arbre menant, située entre les deux roues précitées et portant, par l'intermédiaire d'un roulement à billes, l'arbre mené, confondu avec une troisième roue (94), laquelle accompagne le déplacement de la bague et vient se solidariser avec celle des roues précitées qui n'est plus calée sur l'arbre menant,
   - en ce que la manoeuvre de la tige est, éventuellement, assujettie à l'observation de l'égalité des vitesses des roues à caler alternativement sur l'arbre menant.

9. Dispositif selon la revendication 1, pouvant être utilisé comme différentiel, caractérisé :

   - en ce que deux vases identiques sont accolés par leur grande extrémité et peuvent être déplacés par rapport au châssis, parallèlement à leur axe commun,
   - en ce que ces vases sont entraînés en rotation par un arbre moteur,
   - en ce que les galets sont à la fois maintenus en appui et guidés par des bras (54, 55) en forme de V évasé pivotant par ses deux extrémités autour d'un axe perpendiculaire au plan défini par l'axe des vases et ceux des galets,
   - en ce que l'arbre du galet, tenu par le bras, très court et à moitié intérieur au galet, est prolongé vers la roue motrice par un arbre intermédiaire télescopique (60, 61) relié au galet et à l'axe de la roue par des joints homocinétiques.

10. Dispositif selon la revendication 9 caractérisé

    - en ce que pour chaque vase les angles extrêmes de la tangente avec l'axe aux points de contact médians du galet sont voisins de 21° et 16°
    - en ce que la largeur du galet est voisine de 0,2 T et son angle au sommet voisin de 25°,
      ces dimensions étant appropriées à un véhicule routier.

fig. 1

fig.2

fig. 3

fig. 5

$56^{bis}$

56

54

60

58

51

67

66

63

62

65

52

64

55

63 bis

57

53

61

fig. 4

fig. 6

fig. 7

fig.8

fig.9

fig.10

# EP 0 800 019 A1

**Office européen des brevets**

## RAPPORT DE RECHERCHE EUROPEENNE

Numero de la demande

EP 97 40 0691

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 36 20 505 A (GERHARD) <br> * le document en entier * <br> --- | 1,2 | F16H15/24 |
| A | US 2 721 483 A (HACKER) <br> * colonne 3 - colonne 4; figure 2 * <br> ----- | 1,2,5 | |

**DOMAINES TECHNIQUES RECHERCHES (Int.Cl.6)**

F16H

Le présent rapport a été établi pour toutes les revendications

| Lieu de la recherche | Date d'achèvement de la recherche | Examinateur |
|---|---|---|
| LA HAYE | 9 Juillet 1997 | Flores, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

23